Europäisches Patentamt

(19) European Patent Office

Office européen des brevets

(11) Numéro de publication: **0 099 807 B1**

(12) **FASCICULE DE BREVET EUROPEEN**

(45) Date de publication du fascicule du brevet:
**02.04.86**

(21) Numéro de dépôt: **83401404.5**

(22) Date de dépôt: **07.07.83**

(51) Int. Cl.⁴: **H 02 J 13/00,** H 05 B 37/02,
H 01 H 47/00

(54) Circuit de commande de l'arrêt d'appareils, notamment de moyens d'éclairage.

(30) Priorité: **12.07.82 FR 8212185**

(43) Date de publication de la demande:
**01.02.84 Bulletin 84/5**

(45) Mention de la délivrance du brevet:
**02.04.86 Bulletin 86/14**

(84) Etats contractants désignés:
**DE GB IT NL SE**

(56) Documents cités:
**DE - A - 2 816 876**
**DE - C - 931 902**
**DE - C - 956 783**

(73) Titulaire: **Garcia, José, 101 rue du Chêne Brûlé**
**Cercottes, F-45400 Fleury les Aubrais (FR)**

(72) Inventeur: **Garcia, José, 101 rue du Chêne Brûlé**
**Cercottes, F-45400 Fleury les Aubrais (FR)**

(74) Mandataire: **Mongrédien, André et al, c/o**
**BREVATOME 25, rue de Ponthieu, F-75008 Paris (FR)**

ACTORUM AG

## Description

La présente invention a pour objet un circuit de commande de l'arrêt d'appareils. Elle trouve une application notamment dans la réalisation de systèmes programmables d'extinction d'éclairages à distance que l'inventeur désigne sous le sigle SPEED. Le circuit de l'invention est particulièrement bien adapté aux systèmes destinés à économiser l'énergie électrique consommée par les sources de lumières artificielles (ampoules, tubes luminescents, projecteurs, etc.). Il est utilisable avantageusement dans les installations comprenant un grand nombre de sous-ensembles d'éclairage autonomes.

Actuellement, l'extinction de moyens d'éclairage est réalisée à l'aide d'un commutateur central qui coupe l'alimentation en énergie. Cette solution présente le double inconvénient de conduire à une extinction définitive de tous les moyens d'éclairage sans qu'il soit possible de procéder au réallumage immédiat de certains d'entre eux, et de provoquer la remise en service de tous ces moyens lors du rétablissement de l'alimentation, ce qui ne se justifie pas nécessairement.

La publication DE-C N° 931902 montre un circuit de commande pour l'arrêt d'appareils, chaque appareil étant pourvu d'un interrupteur, lequel comprend au moins un contact et est associé à au moins un bouton-poussoir apte à le faire basculer alternativement en position d'ouverture et en position de fermeture. De plus, le circuit comprend un organe supplémentaire de commande de l'interrupteur, fonctionnellement équivalent au bouton-poussoir mais commandé par un moyen de commande à distance permettant l'arrêt et la remise en marche des appareils.

La publication DE-A N° 2816876 montre un circuit similaire dont le moyen de commande à distance permet uniquement de commander l'arrêt des appareils.

Le circuit de la présente invention propose un appareil plus simple que ceux de l'art antérieur tout en permettant que soient remplies les deux fonctions essentielles suivantes:

— laisser la possibilité de rétablir certains éclairages après extinction;
— ne pas assurer le réallumage, lequel ne peut se faire qu'à l'aide d'une commande propre à chaque moyen.

Le dispositif de l'invention diffère des circuits connus par le fait que l'organe supplémentaire de commande de l'interrupteur est commandé par un relais disposé en série avec l'un des contacts de l'interrupteur pour débrancher ce relais du réseau d'alimentation après l'actionnement du moyen de commande à distance. Du fait que les contacts de l'interrupteur sont commandés en synchronisme, la commande du relais est impossible si l'interrupteur est en position d'ouverture.

Les moyens de commande à distance sont ainsi incapables de remettre en service un appareil à l'arrêt. Cette remise en service ne peut s'effectuer que par les boutons-poussoirs propres à l'appareil.

Le dispositif de l'invention s'adapte très bien aux salles de commutation des grands centraux téléphoniques comportant un grand nombre d'éclairages sectoriels de travée; mais il convient également à des ensembles de bureaux, d'ateliers, de dépôts, de locaux d'habitation, etc.

Le dispositif de l'invention s'applique également à des organes autres que des moyens d'éclairage, tels que moteurs, radiateurs, ventilateurs, appareils de climatisation, machines, équipements divers.

Dans le cas d'appareils électriques, l'énergie nécessaire à l'alimentation peut provenir d'un réseau quelconque: mono, bi ou triphasé, de basse ou de haute tension, alternatif ou continu.

L'invention s'applique également à la commande d'appareils alimentés en énergie autre qu'électrique, par exemple pneumatique ou hydraulique.

En plus d'une économie d'énergie, le circuit de l'invention permet une économie de matériel en diminuant les temps d'utilisation de celui-ci et une économie de main-d'œuvre en réduisant les charges de maintenance.

Les caractéristiques de l'invention apparaîtront mieux après la description qui suit d'exemples de réalisation donnée à titre explicatif et nullement limitatif. Cette description se réfère à des dessins annexés sur lesquels:

la fig. 1 est un schéma de principe du circuit de l'invention,

la fig. 2 illustre un premier mode de réalisation dans lequel l'alimentation du relais s'effectue de manière indépendante de l'alimentation des appareils,

la fig. 3 illustre une variante dans laquelle l'alimentation du relais est assurée par la ligne d'alimentation des appareils,

la fig. 4 illustre une variante dans laquelle le signal de commande du relais est superposé à la tension d'alimentation des appareils,

la fig. 5 est un schéma de principe du circuit de l'invention dans le cas d'une alimentation en courant triphasé,

la fig. 6 illustre une autre variante en courant triphasé,

la fig. 7 illustre un mode de réalisation dans lequel les appareils sont des récepteurs munis de commutateurs,

la fig. 8 illustre une variante dans laquelle le contact qui contrôle l'alimentation des appareils dont on veut commander l'arrêt est mis en série avec le circuit de commande à distance.

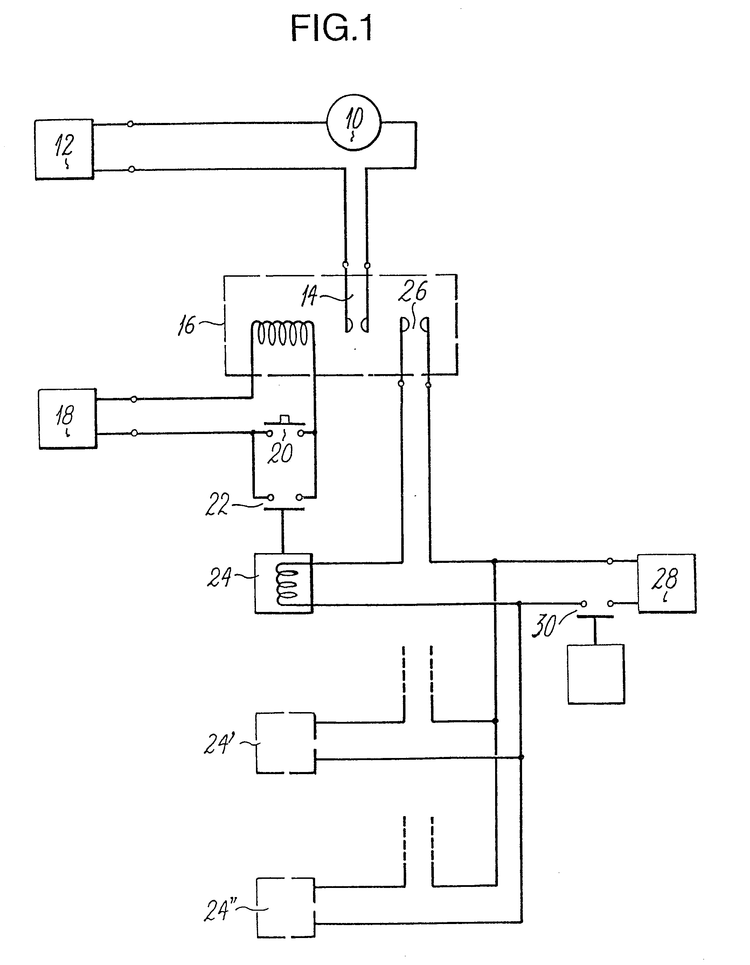

Le dispositif représenté sur la fig. 1 comprend un appareil 10 de type quelconque relié à une source d'alimentation électrique 12 par l'intermédiaire d'un contact 14 appartenant à un interrupteur 16. Celui-ci est alimenté par une source 18 et commandé par un bouton-poussoir 20. L'enfoncement de ce bouton provoque successivement l'ouverture et la fermeture de l'interrupteur, donc l'arrêt et la mise en service de l'appareil 10.

Conformément à l'invention, le dispositif comprend en outre un organe supplémentaire 22 de commande de l'interrupteur 16, cet organe étant fonctionnellement équivalent au bouton-poussoir 20, en ce sens qu'il provoque la fermeture ou l'ouverture de l'interrupteur 16. L'organe 22 est actionné par un relais 24 disposé en série avec un contact 26 appartenant à l'interrupteur 16 et commandé en synchronisme avec le contact 14. Par ailleurs, le relais 24 est alimenté par une source 28 et commandé à distance par un moyen 30.

Le fonctionnement de ce circuit est le suivant: le bouton-poussoir 20 constitue un organe de commande qui est propre à l'appareil 10. Il permet de mettre en service cet appareil ou de le mettre à l'arrêt. En service, les deux contacts 14 et 26 sont fermés. A l'arrêt, ils sont tous deux ouverts. En supposant que l'appareil 10 est en fonctionnement, une action sur l'interrupteur 16 provoque l'arrêt de l'appareil. Cette action peut être accomplie soit par le bouton-poussoir 20 soit par l'organe 22. Dans le premier cas, il s'agit d'une extinction manuelle effectuée par l'opérateur. Dans le second, il s'agit d'une télécommande centralisée. Pour cela, il suffit de fermer le moyen 30, ce qui excite le relais 24 et provoque l'ouverture du contact 14 donc l'arrêt de l'appareil 10.

Après ces opérations, le contact 26 se trouve ouvert, de sorte qu'il n'est plus possible d'agir sur le relais 24 et par conséquent sur l'organe 22. Cela signifie que le moyen 30 de télécommande ne peut assurer la remise en marche de l'appareil 10. Celle-ci ne peut être obtenue que par les moyens de commande propres à l'interrupteur 16, c'est-à-dire, en l'occurrence, par action sur le bouton-poussoir 20.

En d'autres termes, la fermeture du contact 30 permet de commander à distance l'arrêt de l'appareil 10 si celui-ci est en service, mais n'a aucun effet sur l'installation si l'appareil est à l'arrêt.

En pratique, les moyens d'alimentation 28 et de télécommande 30 sont communs à un certain nombre de sous-ensembles ayant chacun un relais 24, 24', 24'' ... monté en série avec un contact de l'interrupteur propre à cet ensemble. La fermeture du contact 30 provoque alors l'arrêt de tous les appareils en service dans ces sous-ensembles mais est sans effet sur les appareils à l'arrêt.

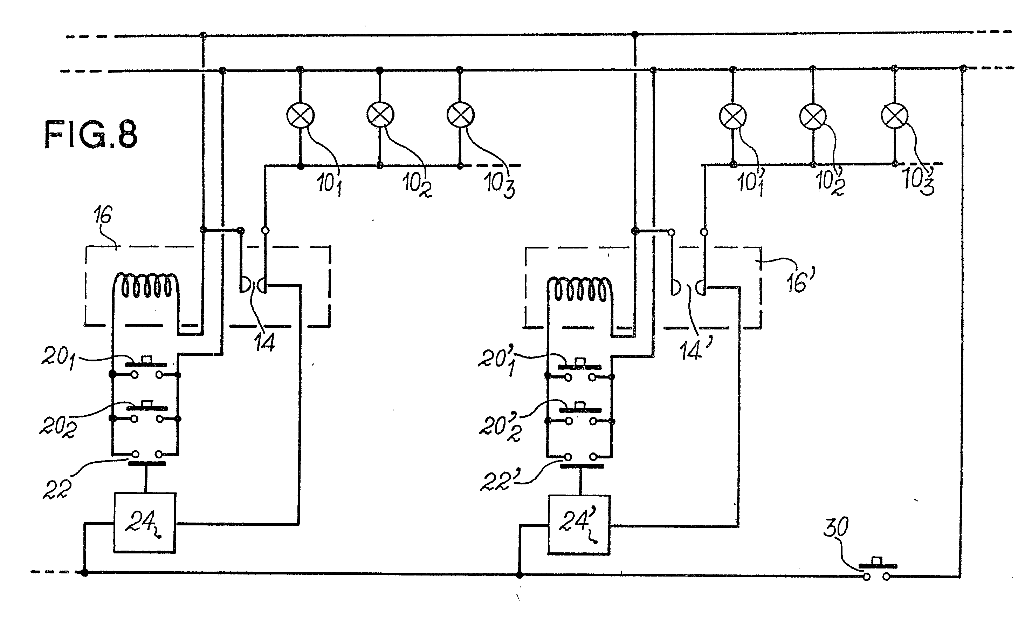

Pour certaines variantes, les contacts 14 et 26 peuvent être confondus comme l'illustrera la fig. 8.

Les figures suivantes illustrent quelques exemples de mise en œuvre du principe qui vient d'être décrit, dans le cas où l'appareil 10 est un organe électrique alimenté à partir d'un réseau de distribution de courant. Dans cette application, l'interrupteur 16 est du type télérupteur et permet de commander un appareil au moyen de plusieurs boutons-poussoirs répartis en différents endroits.

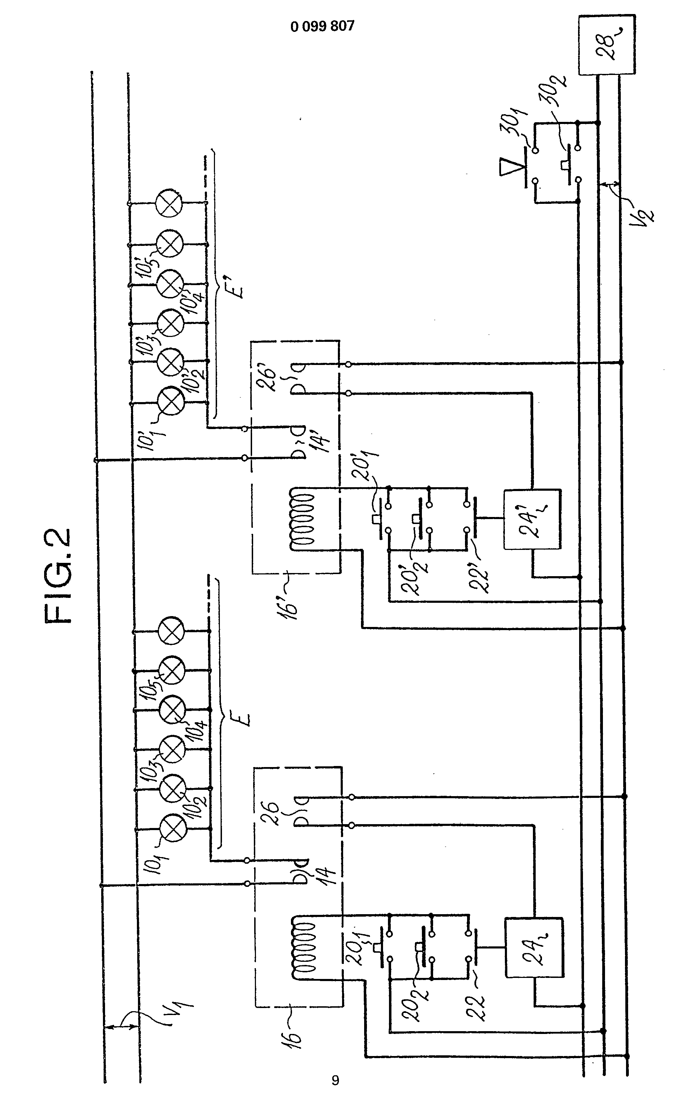

La fig. 2 représente tout d'abord deux ensembles E et E' de lampes d'éclairage $10_1$, $10_2$, $10_3$ ... et $10'_1$, $10'_2$, $10'_3$ ... alimentés respectivement à travers des télérupteurs 16, 16' dont un contact 14, 14' est en série avec une ligne d'alimentation fournissant une tension $V_1$. Les télérupteurs sont commandés chacun par deux boutons-poussoirs $20_1$, $20_2$ et $20'_1$, $20'_2$ et par un contact supplémentaire 22, 22' commandé par un relais 24, 24'. Ce relais est en série avec l'un des contacts 26, 26' du télérupteur. Une alimentation 28 délivre une tension $V_2$ qui sert à la fois aux télérupteurs 16 et 16' et aux relais 24 et 24'. Les moyens de commande des relais comprennent un contact $30_1$ à commande programmable et un bouton-poussoir $30_2$ à commande manuelle. Le contact $30_1$ peut être commandé par une horloge, par un photodétecteur ou par tout autre moyen selon les conditions d'utilisation.

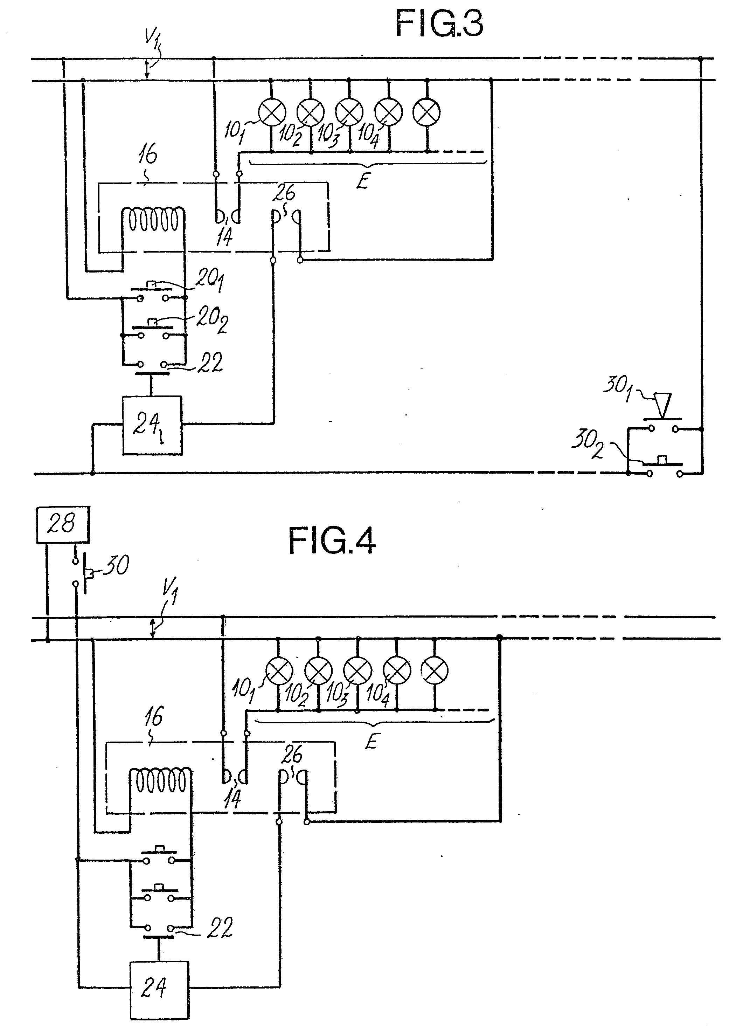

Le schéma de la fig. 3 ne diffère de celui de la fig. 2 que par le fait que le télérupteur 16 et le relais 24 sont alimentés non plus à partir d'une source autonome mais à partir de la tension $V_1$ d'alimentation des lampes.

Dans le circuit de la fig. 4, la tension appliquée au relais 24 résulte de la superposition de la tension délivrée par la source 28 et de la tension d'alimentation des lampes. La tension délivrée par la source 28 possède une caractéristique particulière à laquelle est sensible le relais. Il peut s'agir d'une tension en forme d'impulsions brèves, ou d'une tension possédant une fréquence appropriée. Une autre possibilité est d'interrompre la tension d'alimentation $V_1$ à l'aide de son interrupteur propre selon un code prédéterminé reconnu par le relais.

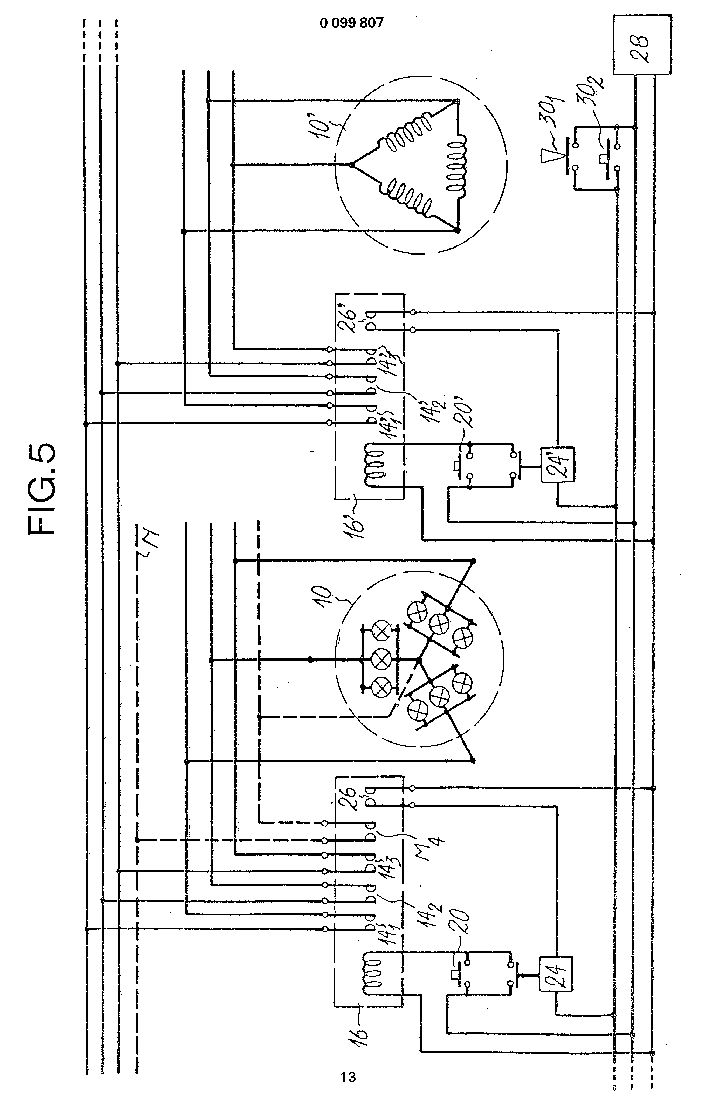

La fig. 5 représente une variante dans laquelle l'installation électrique d'alimentation est triphasée. Le télérupteur comprend alors un contact par phase, soit 3 contacts $14_1$, $14_2$, $14_3$ auxquels s'ajoute un contact $M_4$ pour le neutre quand cela est nécessaire (ligne N en tirets). L'appareil à alimenter est en l'occurrence un ensemble de lampes 10 sur la partie gauche et un moteur électrique 10' monté en triangle sur la partie droite.

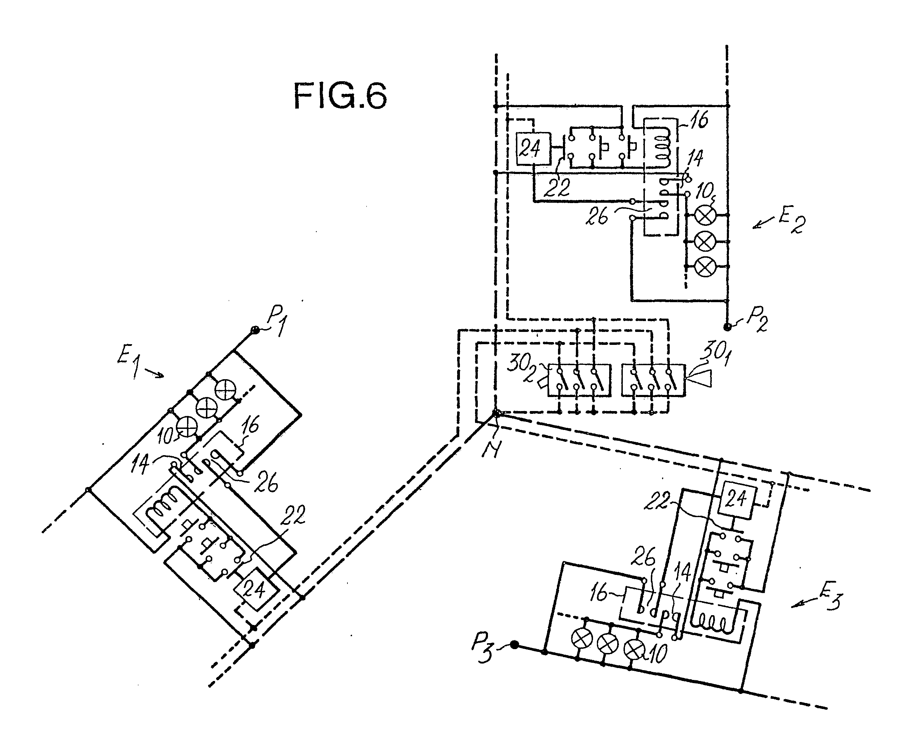

La fig. 6 concerne encore une installation triphasée mais avec un neutre N sorti. Les trois phases $P_1$, $P_2$, $P_3$ alimentent trois ensembles d'éclairage $E_1$, $E_2$, $E_3$. Les contacts de commande programmable $30_1$ et de commande manuelle $30_2$ sont cette fois des contacts triples associés aux trois phases.

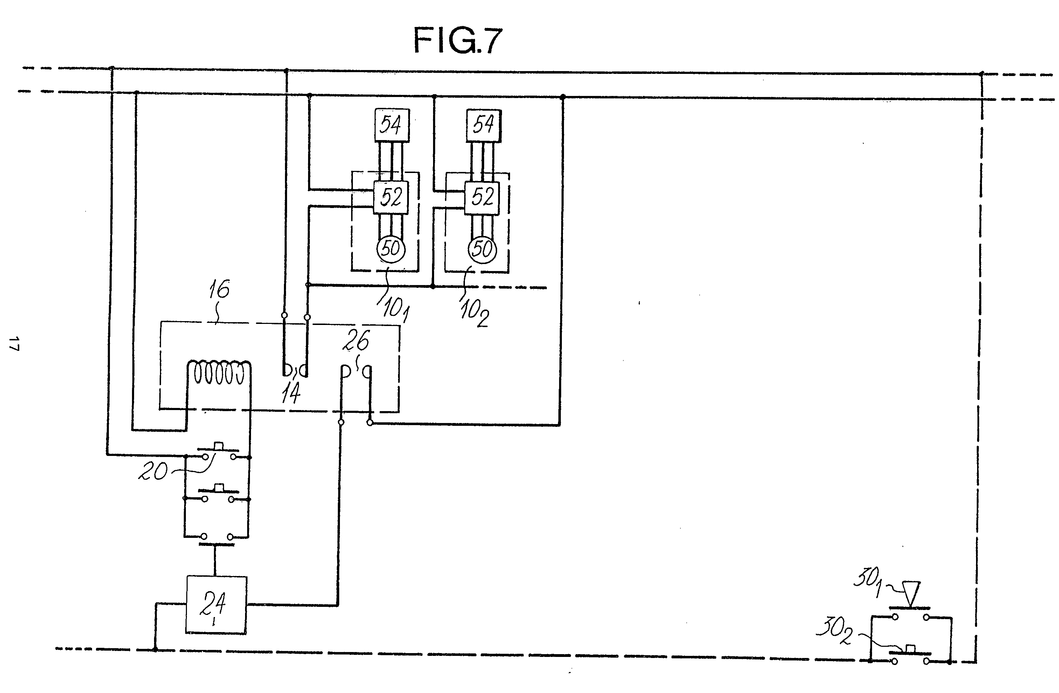

La fig. 7 illustre une variante dans laquelle l'appareil à commander est un organe 50 associé à un commutateur 52 à deux positions arrêt-marche. Le circuit de commande d'arrêt est encore composé d'un relais 24 et d'un contact 26, mais il agit cette fois sur le commutateur 52 et non directement sur l'appareil 50. Celui-ci est alimenté par une source d'énergie 54 de nature quelconque (électrique, hydraulique, etc.). Dans ce cas, l'appareil 50 peut donc être un moteur, un radiateur, un groupe froid, une pompe à chaleur, etc.

Enfin, la fig. 8 illustre une variante caractérisée par le fait que le contact de l'interrupteur qui contrôle l'alimentation des appareils dont on veut commander l'arrêt est mis en série avec le circuit 30 de commande à distance, le contact unique 14' réunissant à la fois les contacts 14 et 26 des variantes précédentes.

Dans tout ce qui précède, les moyens de télécommande 30 peuvent prendre une grande diversité de forme: il peut s'agir simplement d'un bouton-poussoir que l'opérateur actionne à sa guise, par exemple en fin de journée ou aux heures creuses; mais il peut s'agir aussi d'un moyen automatique utilisant un détecteur déterminant l'instant propice d'extinction. Dans le cas de l'application aux installations d'éclairage, ce détecteur peut être un photodétecteur sensible à la lumière ambiante et qui commande l'extinction des lampes lorsque l'éclairage naturel rend inutile l'éclairage artificiel.

Après cette description, les avantages de l'invention apparaissent clairement.

D'une manière plus simple qu'exposé dans l'état de la technique, le réseau d'alimentation des lampes n'est pas interrompu, mais seulement remis dans un état de repos à partir duquel chaque lampe peut être à nouveau rallumée de manière autonome.

## Revendications

1. Circuit de commande de l'arrêt d'appareils (10), chaque appareil étant pourvu d'un interrupteur (16), lequel comprend au moins un contact (14) et est associé à au moins un bouton-poussoir (20) apte à le faire basculer alternativement en position d'ouverture et en position de fermeture, ce circuit comprenant encore un organe supplémentaire de commande (22) de l'interrupteur, fonctionnellement équivalent au bouton-poussoir et relié à des moyens de commande à distance (28, 30) permettant uniquement l'arrêt des appareils, caractérisé en ce que cet organe supplémentaire est commandé par un relais (24) disposé en série avec l'un des contacts de l'interrupteur (26).

2. Circuit selon la revendication 1, caractérisé en ce que le moyen de commande à distance du relais comprend une source d'alimentation (28) indépendante du réseau d'alimentation des appareils.

3. Circuit selon la revendication 1, caractérisé en ce que le moyen de commande à distance du relais est branché sur le réseau d'alimentation des appareils.

4. Circuit selon la revendication 1, caractérisé en ce que le moyen de commande à distance du relais comprend une source (28) de caractéristique particulière reliée au réseau électrique, le relais étant sensible à cette caractéristique particulière.

5. Circuit selon la revendication 1, caractérisé en ce que, le réseau étant du type triphasé avec neutre, l'interrupteur comprend, pour chaque appareil, au moins trois contacts, un pour chaque phase et un pour le neutre.

6. Circuit selon l'une des revendications 1 à 5, caractérisé en ce que les moyens de commande à distance du relais comprennent un interrupteur à commande automatique et/ou à commande manuelle.

7. Circuit selon l'une des revendications 1 à 6, caractérisé en ce que les appareils sont des organes électriques, hydrauliques, pneumatiques ou autres.

8. Circuit selon la revendication 7, caractérisé en ce que les appareils sont des moyens d'éclairage.

## Patentansprüche

1. Steuerungsschaltung zur Ausschaltung von Geräten (10), wobei jedes Gerät mit einem Ausschalter (16) versehen ist, der wenigstens einen Kontakt (14) enthält und wenigstens einem Druckknopf (20) zugeordnet ist, der dazu geeignet ist, ihn alternativ in die Öffnungsstellung oder in die Schliessstellung kippen zu lassen, wobei diese Schaltung noch ein zusätzliches Unterbrechersteuerorgan (22) enthält, das funktionell dem Druckknopf äquivalent ist und mit Fernsteuereinrichtungen (28, 30) verbunden ist, die allein die Ausschaltung der Geräte gestatten, dadurch gekennzeichnet, dass das zusätzliche Organ von einem Relais (24) gesteuert ist, das in Serie mit dem einen der Kontakte des Ausschalters (26) geschaltet ist.

2. Schaltung nach Anspruch 1, dadurch gekennzeichnet, dass die Relaisfernsteuereinrichtung eine Versorgungsquelle (28) enthält, die unabhängig vom Versorgungsnetz der Geräte ist.

3. Schaltung nach Anspruch 1, dadurch gekennzeichnet, dass die Relaisfernsteuerungseinrichtung über das Versorgungsnetz der Geräte geschaltet ist.

4. Schaltung nach Anspruch 1, dadurch gekennzeichnet, dass die Relaisfernsteuereinrichtung eine Quelle (28) enthält, die eine spezielle, auf das elektrische Netz bezogene Charakteristik hat, wobei das Relais auf diese spezielle Charakteristik anspricht.

5. Schaltung nach Anspruch 1, dadurch gekennzeichnet, dass das Netz ein Dreiphasennetz mit Nulleiter ist und der Ausschalter für jedes Gerät wenigstens drei Kontakte, einen für jede Phase und einen für den Nulleiter enthält.

6. Schaltung nach einem der Ansprüche 1 bis 5, dadurch gekennzeichnet, dass die Relaisfernsteuereinrichtungen einen Unterbrecher mit automatischer und/oder manueller Steuerung enthalten.

7. Schaltung nach einem der Ansprüche 1 bis 6, dadurch gekennzeichnet, dass die Geräte elektrische, hydraulische, pneumatische oder andere Organe sind.

8. Schaltung nach Anspruch 7, dadurch gekennzeichnet, dass die Geräte Beleuchtungsgeräte sind.

## Claims

1. Control circuit for switching off apparatus (10), each apparatus being provided with an interruptor (16) which itself comprises at least one contact (14) and which is associated with at least one push-button (20) adapted to move alternately between open and closed positions, said circuit additionally comprising a supplementary control means (22) for the interruptor, operating in equivalent manner to the push-button and connected to remote control means (28, 30) providing only switching off of the apparatus, characterized in that said supplementary means is controlled by a relay (24) disposed in series with one of the contacts of the interruptor (26).

2. Circuit according to Claim 1, characterized in that the remote control means of the relay comprises a power-supply source (28) independent of the power-supply circuit of the apparatus.

3. Circuit according to Claim 1, characterized in that the remote control means of the relay is branched from the power-supply system of the apparatus.

4. Circuit according to Claim 1, characterized in that the remote control means of the relay comprises a source (28) of specific characteristic connected to the electric supply circuit, the relay being sensitive to said particular characteristic.

5. Circuit according to Claim 1, characterized in that the supply system being of the three-phase type with neutral, the interruptor comprises, for each apparatus, at least three contacts, one for each phase and one for neutral.

6. Circuit according to any one of Claims 1 to 5, characterized in that the remote control means for the relay comprises an automatically controlled and/or manually controlled interruptor.

7. Circuit according to any one of Claims 1 to 6, characterized in that the apparatus is of electrical, hydraulic, pneumatic or other type.

8. Circuit according to Claim 7, characterized in that the apparatus is lighting means.

# FIG.1

# FIG.2

# FIG.3

# FIG.4

# FIG.5

0 099 807

FIG.6

FIG.7

FIG.8